(19) Europäisches Patentamt / European Patent Office / Office européen des brevets

(11) EP 3 473 541 B1

(12) FASCICULE DE BREVET EUROPEEN

(45) Date de publication et mention de la délivrance du brevet:
**02.04.2025 Bulletin 2025/14**

(21) Numéro de dépôt: **18201074.4**

(22) Date de dépôt: **17.10.2018**

(51) Classification Internationale des Brevets (IPC):
**B64C 25/42** (2006.01) **B60T 1/06** (2006.01)
**F16D 55/36** (2006.01) **F16D 65/02** (2006.01)
**F16D 65/092** (2006.01) **F16D 65/095** (2006.01)
**F16B 43/00** (2006.01) **F16B 43/02** (2006.01)
**B29C 64/153** (2017.01)

(52) Classification Coopérative des Brevets (CPC):
**B60T 1/062; B29C 64/153; B64C 25/42;
F16B 43/001; F16B 43/02; F16D 55/36;
F16D 65/092; F16D 65/095;** F16D 2065/1372;
F16D 2065/138; F16D 2065/1392

(54) **CALE DE BARRETTE DE ROUE FREINÉE D'AÉRONEF**

LEISTENKEIL EINES GEBREMSTEN RADS EINES LUFTFAHRZEUGS

AIRCRAFT BRAKED WHEEL STRIP WEDGE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **23.10.2017 FR 1760000**

(43) Date de publication de la demande:
**24.04.2019 Bulletin 2019/17**

(73) Titulaire: **Safran Landing Systems
78140 Vélizy-Villacoublay (FR)**

(72) Inventeurs:
• **LAGET, Valérie**
  **67120 MOLSHEIM (FR)**
• **ARGENTERO, Stefano**
  **67120 MOLSHEIM (FR)**
• **DENDIEVEL, Rémy**
  **38402 SAINT MARTIN D'HERES cedex (FR)**
• **CAMUS, Théophile**
  **38140 RENAGE (FR)**

(74) Mandataire: **Cabinet Boettcher et al
5, rue de Vienne
75008 Paris (FR)**

(56) Documents cités:
EP-A1- 2 743 585     EP-A1- 2 940 340
EP-A1- 2 963 346     WO-A1-2016/128322
CN-U- 205 553 074    US-A- 5 851 056
US-A1- 2007 246 995  US-A1- 2011 030 378

**Description**

ARRIERE PLAN DE L'INVENTION

On connaît des roues d'aéronef montées sur des atterrisseurs d'aéronef et destinés à coopérer avec un frein. En général, le frein comporte des disques qui s'étendent à l'intérieur de la jante de la roue, dont des disques stators arrêtés en rotation disposés en alternance avec des disques stators entraînés en rotation par la jante de la roue par des barrettes solidaires de la jante qui s'étendent dans des encoches périphériques de disques rotors. Une pression commandée sur l'ensemble des disques génère du frottement entre les disques en regard et donc un couple de freinage qui ralentit la rotation de la roue.

Les barrettes s'étendent à l'intérieur de la jante de la roue selon une direction sensiblement parallèle à un axe de rotation de la roue. Elles peuvent être venues de matière avec la jante de la roue ou rapportées sur cette dernière, selon diverses modalités. Certaines barrettes connues comportent à une extrémité une queue cylindrique venant s'enfoncer dans des orifices pratiqués dans le voile de la jante selon un axe parallèle à l'axe de rotation de la roue, tandis que l'autre extrémité comporte un orifice adapté à recevoir une vis s'étendant en service selon un axe radial et se vissant dans un orifice taraudé de la jante. La barrette est alors associée à une cale qui est interposée entre la barrette et la jante pour d'une part positionner la barrette selon une direction parallèle à l'axe de rotation de la roue et d'autre part contribuer à limiter les flux de chaleur entre la pile de disques et la jante de la roue.

En effet, il importe de faire en sorte que la température de la jante ne dépasse pas des températures qui pourraient être préjudiciables au pneumatique porté par la jante dans la mesure où les barrettes sont au contact des disques rotors qui peuvent être portés à très haute température lors de certains freinages. La jante, qui est le plus souvent en alliage d'aluminium, est classiquement protégée par des écrans thermiques qui limitent l'échauffement de celle-ci par radiation. Mais la cale, qui est en contact direct de la jante, constitue un chemin de conduction susceptible de provoquer un échauffement local de la jante d'autant plus délicat qu'il intervient à proximité du talon de la jante sur lequel vient s'appuyer le pneumatique.

On connaît du document US 2007/246995 des cales comportant deux massifs d'appui séparés par une âme centrale percée pour laisser passer la vis de fixation de la barrette à la jante. Une telle géométrie optimise le transfert du couple de freinage, en répartissant la pression d'appui de la cale sur la jante. Cependant, elle peut donner lieu, au niveau des contacts des massifs d'appui sur la jante à des échauffements ponctuels qu'il convient de limiter.

OBJET DE L'INVENTION

L'invention vise à proposer une cale de barrette de roue diminuant le transfert de chaleur par la barrette des disques vers la jante.

PRESENTATION DE L'INVENTION

En vue de la réalisation de ce but, on propose une cale selon la revendication 1.

Les évidements diminuent notablement la capacité des massifs à conduire la chaleur en provenance de la barrette vers la jante, sans altérer le transfert du couple vers la jante. Ces évidements sont facilement réalisables par des techniques de fabrication additive, selon diverses géométries.

DESCRIPTION DES FIGURES

L'invention sera mieux comprise à la lumière de la description qui suit d'un mode particulier de réalisation de l'invention, en référence aux figures des dessins annexés, parmi lesquelles :

- La figure 1A est une vue en coupe longitudinale d'une roue freinée montée sur un essieu d'atterrisseur d'aéronef, dont la jante est équipée de barrettes avec interposition d'une cale selon l'invention
- La figure 1B est une vue en perspective d'une des barrettes et sa cale, montrant sa disposition sur la jante de la roue ;
- Les figures 2A et 2B sont des vues en perspective de la cale et de la barrette des figures 1A et 1B, telles qu'elles sont assemblées en service ;
- Les figures 3A à 3C sont des vues en perspective, de face et de derrière qui illustrent une cale à massifs évidés selon un premier mode particulier de réalisation de l'invention ;
- Les figures 4A à 4C sont des vues en perspective, de face, de derrière, qui illustrent une cale à massifs évidés selon un deuxième mode particulier de réalisation de l'invention ;
- Les figures 5A à 5F sont des vues en perspective, de face, de derrière, puis en coupe, qui illustrent une cale à massifs évidés selon un troisième mode particulier de réalisation de l'invention ; la figure 5G est un agrandissement de l'un des motifs internes de la cale ;
- Les figures 6A à 6F sont des vues en perspective, de face, de derrière, puis en coupe, qui illustrent une cale à massifs évidés selon un quatrième mode particulier de réalisation de l'invention ; la figure 6G est un agrandissement de l'un des motifs internes de la cale ;
- Les figures 7A à 7F sont des vues en perspective, de face, de derrière, puis en coupe, qui illustrent une cale à massifs évidés selon un cinquième mode particulier de réalisation de l'invention ; la figure 7G est un agrandissement de l'un des motifs internes de la cale ;

- Les figures 8A à 8F sont des vues en perspective, de face, de derrière, puis en coupe, qui illustrent une cale à massifs évidés selon un sixième mode particulier de réalisation de l'invention ;
- Les figures 9A à 9F sont des vues en perspective, de face, de derrière, puis en coupe, qui illustrent une cale à massifs évidés selon un septième mode particulier de réalisation de l'invention ; la figure 9G est un agrandissement de l'un des motifs internes de la cale ;
- Les figures 10A à 10F sont des vues en perspective, de face, de derrière, puis en coupe, qui illustrent une cale à massifs évidés selon un huitième mode particulier de réalisation de l'invention ; la figure 10G est un agrandissement de l'un des motifs internes de la cale ;
- Les figures 11A à 11F sont des vues en perspective, de face, de derrière, puis en coupe, qui illustrent une cale à massifs évidés selon un neuvième mode particulier de réalisation de l'invention.

Sur les figures, les axes X,Y,Z sont relatifs à la cale et quand la cale est en position sur la jante, l'axe X est parallèle à l'axe de rotation Δ de la roue, l'axe Y est parallèle à une direction orthoradiale, et l'axe Z est parallèle à une direction radiale. Les directions mentionnées ci-dessous sont données par les coordonnées (a,b,c) d'un vecteur directeur dans le repère (X,Y,Z).

DESCRIPTION DETAILLEE DE L'INVENTION

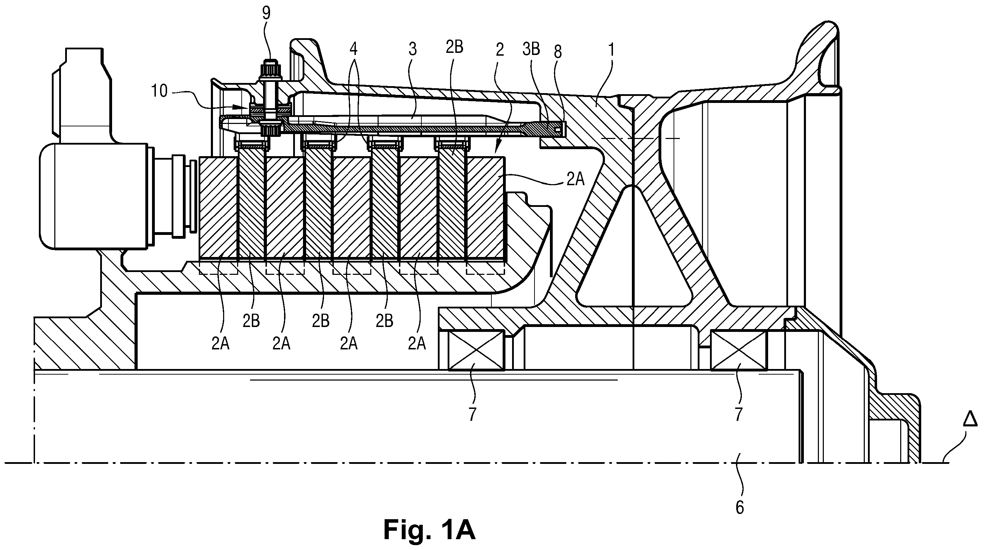

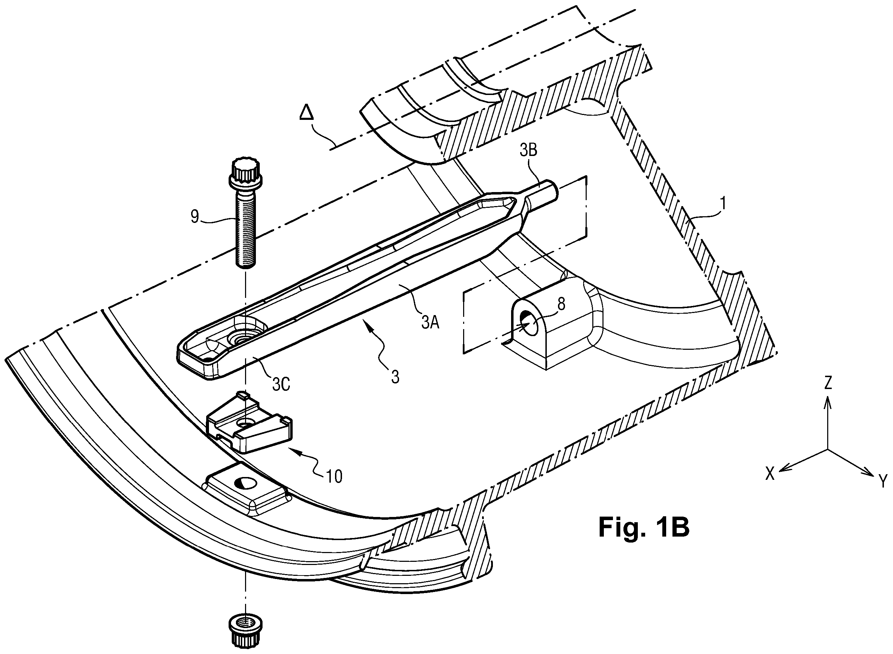

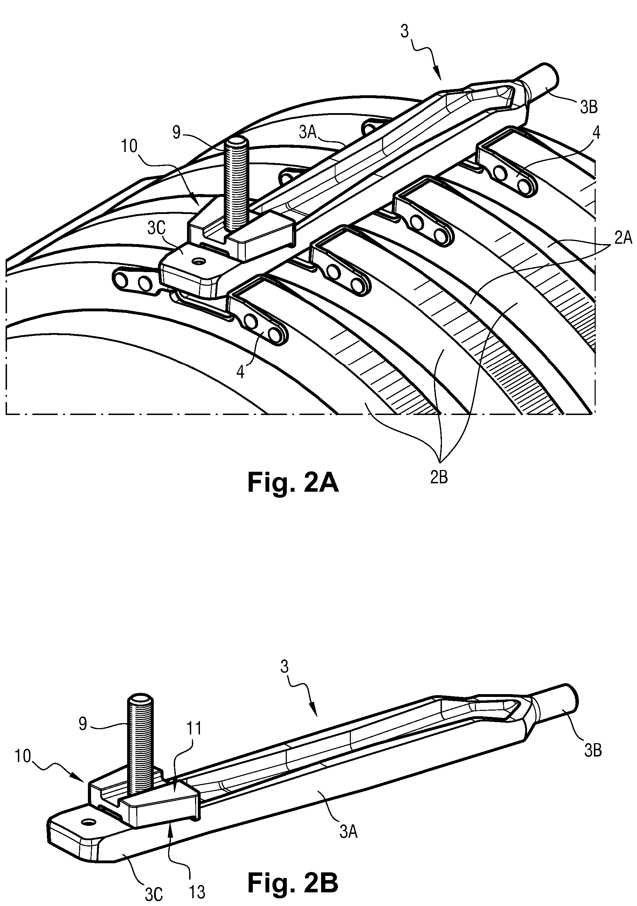

En référence aux figures 1A à 2B, une roue freinée d'aéronef comporte une jante 1 montée pour tourner selon un axe de rotation Δ sur un essieu d'atterrisseur 6 au moyen de roulements 7. La jante 1 reçoit un pneumatique (non représenté ici) et définit une cavité dans laquelle une pile de disques de freins 2 s'étend. La pile 2 comporte des disques stators 2A arrêtés en rotation en alternance avec des disques rotors 2B qui sont entraînés en rotation par la roue au moyen de barrettes 3 qui sont fixées à la jante 1 et qui coopèrent avec des cavaliers 4 des disques rotors 2B protégeant les flancs d'encoches des disques rotors 2B dans lesquels les barrettes 3 s'étendent. Ici, les barrettes 3 comportent un corps allongé 3A qui s'étend sensiblement selon une direction parallèle à l'axe Δ et qui comporte une extrémité en forme de queue cylindrique 3B qui est reçue dans un orifice 8 de la jante s'étendant parallèlement à l'axe X, et une autre extrémité 3C qui comporte un perçage 3D selon une direction radiale destinée à recevoir une vis de fixation 9 de la barrette 3 à la jante 1.

Une cale 10 est interposée entre la barrette 3 et la jante 1 pour à la fois maintenir la barrette en position sensiblement parallèle à l'axe de rotation Δ, former une interface mécanique entre la barrette 3 et la jante 1, et former une barrière thermique à la conduction de chaleur de la barrette 3 vers la jante 1. Tout ceci est bien connu et n'est rappelé qu'à titre d'illustration.

Ici, la cale 10 comporte deux massifs d'appui 11 définissant deux faces d'appui opposées, à savoir une face d'appui 12 contre la jante 1 et une face d'appui 13 contre la barrette 3. De la face d'appui 13 contre la barrette 3 et au niveau de la face arrière de la cale 10 saillent deux tétons 14 qui ont pour fonction de centrer la cale 10 sur la barrette 3. Les massifs d'appui 11 sont ici reliés entre eux par une âme 15 qui comporte un perçage 16 pour permettre le passage de la vis de fixation 9 de la barrette 3 à la jante 1. Dans tous les modes de réalisation illustrés ici, les massifs d'appui 11 ont des flancs obliques 19 de sorte que la face avant 17 de la cale 10 est plus petite que sa face arrière 18.

Selon l'invention, les massifs d'appui 11 sont évidés selon un taux d'évidement au moins égal à 30% de leur volume d'encombrement. On entend ici par « volume d'encombrement » le volume défini par les dimensions extérieures des massifs d'appui 11, lequel est identique avant et après évidement. Les évidements ainsi pratiqués diminuent considérablement le taux de conduction thermique de la cale 10 et contribuent ainsi à limiter significativement l'échauffement de la jante 1 au niveau de l'appui de la cale 10 sur la jante 1. Dans tous les modes de réalisation détaillés ci-dessous, les évidements débouchent au moins sur la face avant 17 et la face arrière 18 de la cale 10, de façon à réaliser dans les cales un passage d'air d'une face à l'autre selon la direction (1,0,0).

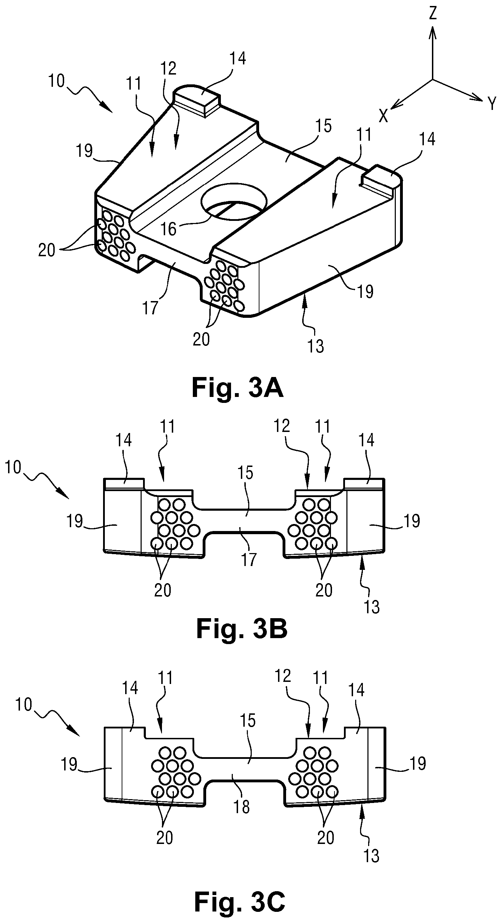

Selon un premier mode particulier de réalisation illustré aux figures 3A à 3C, les massifs d'appui 11 de la cale 10 ont été évidés par la réalisation de canaux tubulaires 20 qui s'étendent selon la direction (1,0,0) de la face avant à la face arrière. Ici, onze canaux 20 ont été ménagés dans chacun des massifs d'appui 11, pour obtenir un taux d'évidement de 33%. Par rapport à une cale pleine, la diminution du flux thermique transmis par conduction par la cale est estimée à 33%.

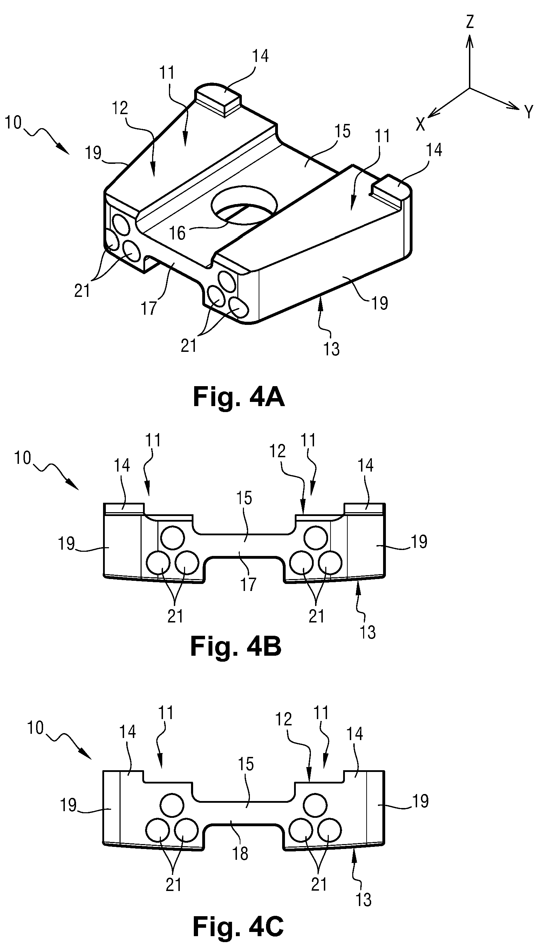

Selon un deuxième mode particulier de réalisation illustré aux figures 4A à 4C, les massifs d'appui 11 ont été évidés par la réalisation de canaux 21 qui s'étendent selon la direction (1,0,0). Ici, trois canaux d'un diamètre supérieur à celui des canalisations 20 du mode de réalisation précédent ont été ménagés dans chacun des massifs d'appui 11 pour obtenir un taux d'évidement de 35%. Par rapport à une cale pleine, la diminution du flux thermique transmis par conduction par la cale est estimée à 35%.

Les canaux 20,21 peuvent être obtenus par perçage des massifs d'appui 11 après fabrication de la cale 10. Alternativement, ils peuvent être obtenus en même temps que le reste de la cale 10 par tout procédé de fabrication additive.

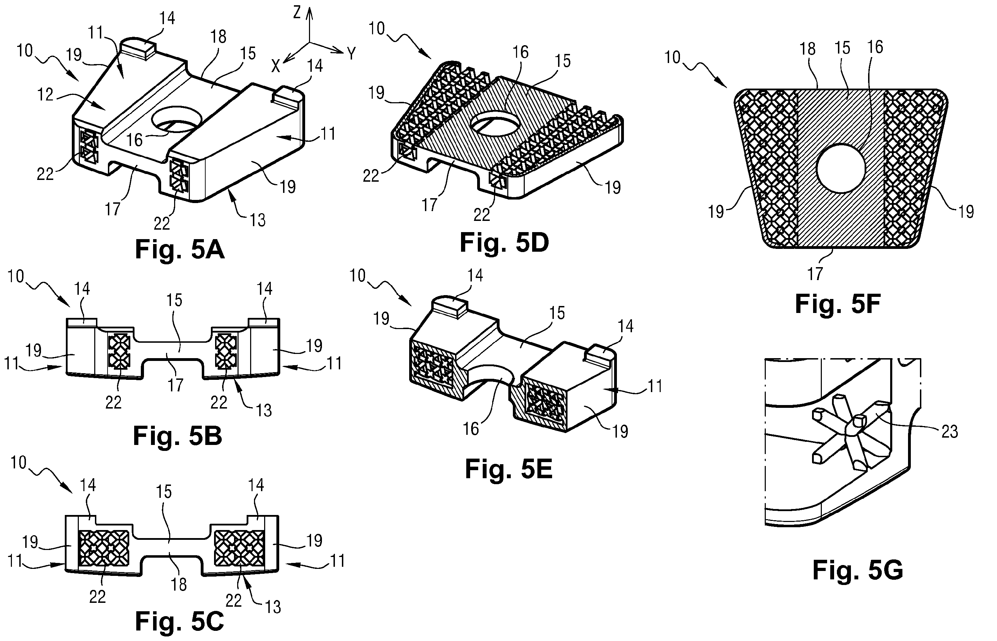

Selon un troisième mode particulier de réalisation illustré aux figures 5A à 5G, la cale 10 est obtenue par fabrication additive de façon à ménager à l'intérieur des massifs d'appui 11 une structure évidée en treillis 22 dont le motif élémentaire en étoile 23 est visible à la figure 5G. Le motif 23 s'inscrit ici dans un cube et comporte des branches de section constante qui rayonnent du centre du cube vers les huit coins du cube, donc selon les directions (1,1,1), (1,-1,-1), (-1,-1,1) et (-1,1,-1). Ici, le motif élémentaire 23 est dupliqué 9 fois dans la direction (1,0,0). Les motifs ainsi dupliqués sont juxtaposés les uns aux autres selon deux couches parallèles au plan XY. L'une des couches est visible sur les figures 5D et 5F où la cale a été découpée selon un plan médian parallèle au plan XY. Ici, la structure évidée conduit à un taux d'évidement des massifs d'appui 11 de 47%. Par rapport à une cale pleine, la diminution du flux thermique transmis par conduction par la cale est estimée à 60%.

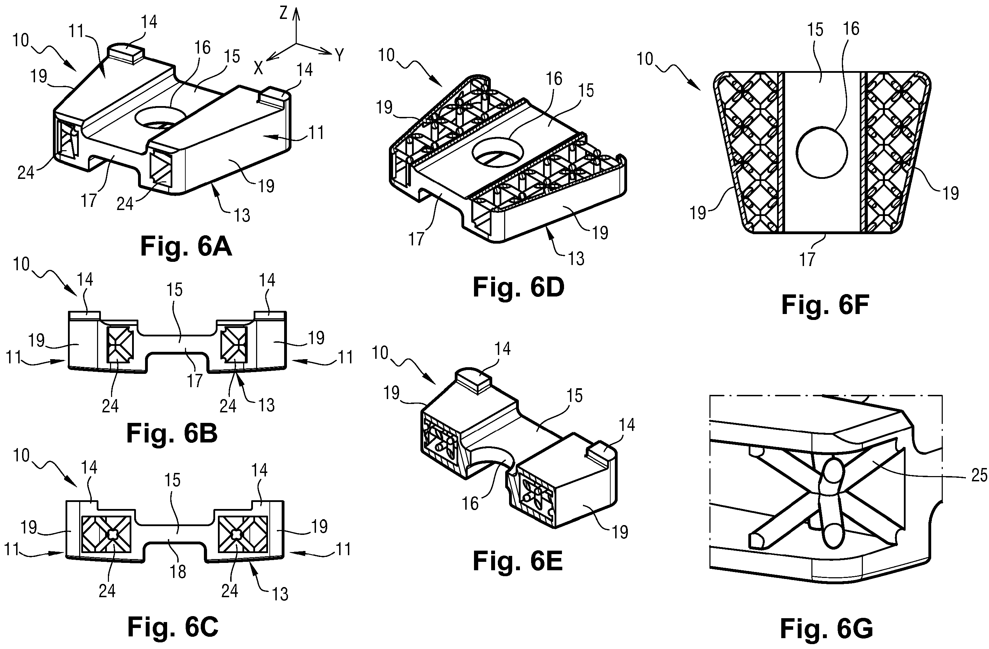

Selon un quatrième mode particulier de réalisation illustré aux figures 6A à 6G, la cale 10 est obtenue par fabrication additive de façon à ménager à l'intérieur des massifs 11 une structure évidée en treillis 24 dont le motif élémentaire en étoile 25 est visible à la figure 6G. Le motif 25 est similaire à celui du mode de réalisation précédent. Cependant, le cube dans lequel le motif 25 s'inscrit a ici un côté double de celui du mode de réalisation précédent, de sorte que les motifs 25 sont juxtaposés selon une seule couche parallèle au plan XY. La structure évidée conduit à un taux d'évidement des massifs d'appui 11 de 51%. Par rapport à une cale pleine, la diminution du flux thermique transmis par conduction par la cale est estimée à 63%.

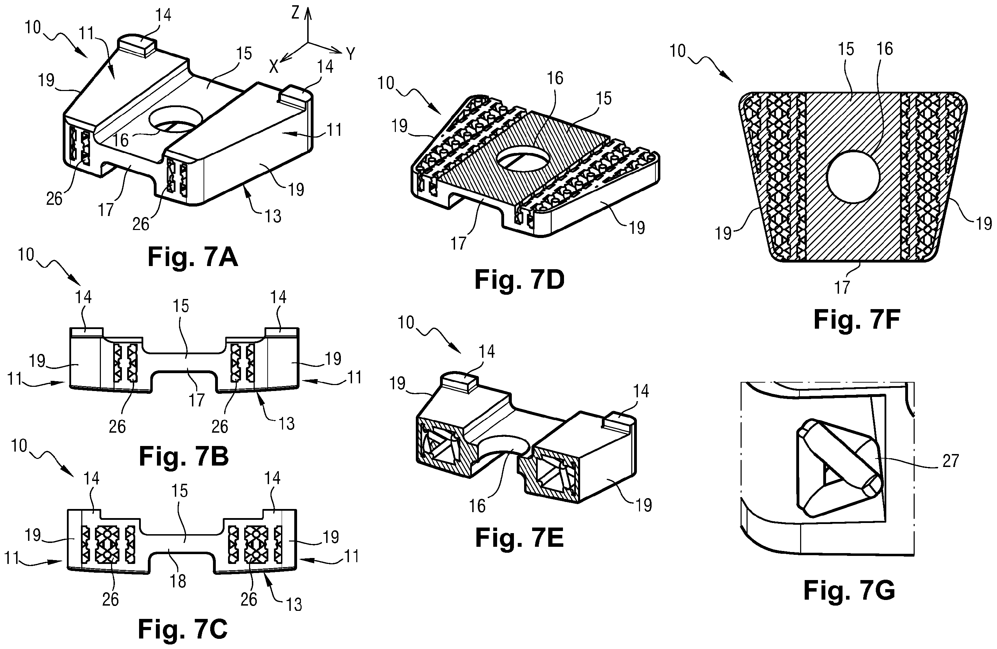

Selon un cinquième mode particulier de réalisation illustré aux figures 7A à 7G, la cale 10 est obtenue par fabrication additive de façon à ménager à l'intérieur de massifs 11 une structure évidée en treillis 26 dont le motif élémentaire en tétraèdre 27 est visible à la figure 7G et comprend des branches à section constante dont une branche s'étend selon la direction (0,0,1) et une branche opposée s'étend selon la direction (1,0,0). Ce motif est dupliqué selon les directions (1,0,0), $(1, \sqrt{2}, 1)$, $(1, \sqrt{2}, -1)$. Cette structure évidée donne lieu à un taux d'évidement des massifs d'appui 11 de 53%. Par rapport à une cale pleine, la diminution du flux thermique transmis par conduction par la cale est estimée à 67%.

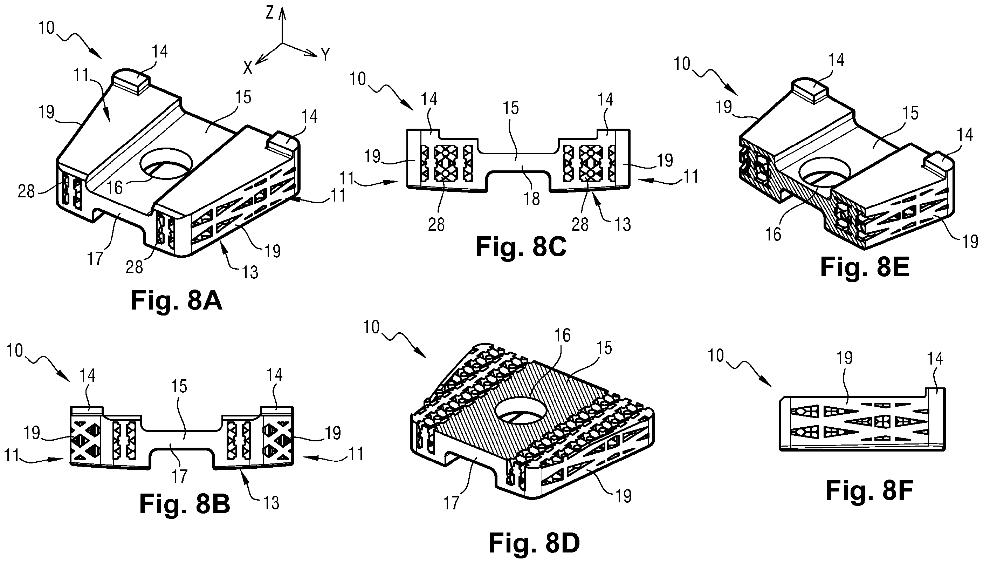

Selon un sixième mode particulier de réalisation illustré aux figures 8A à 8F, la cale 10 est obtenue par fabrication additive de façon à ménager à l'intérieur des massifs 11 une structure en tétraèdre 28 dont le motif élémentaire comprend des branches à section constante dont une branche s'étend selon la direction (0,1,0) et une branche opposée selon la direction (1,0,0). Ce motif est dupliqué selon les directions (1,0,0), $(1, 1, \sqrt{2})$, $(1, -1, \sqrt{2})$. Dans ce mode de réalisation, les évidements ainsi pratiqués débouchent en outre sur les flancs 29 des massifs 11. Cette structure évidée donne lieu à un taux d'évidement des massifs d'appui 11 de 37%. Par rapport à une cale pleine, la diminution du flux thermique transmis par conduction par la cale est estimée à 44%.

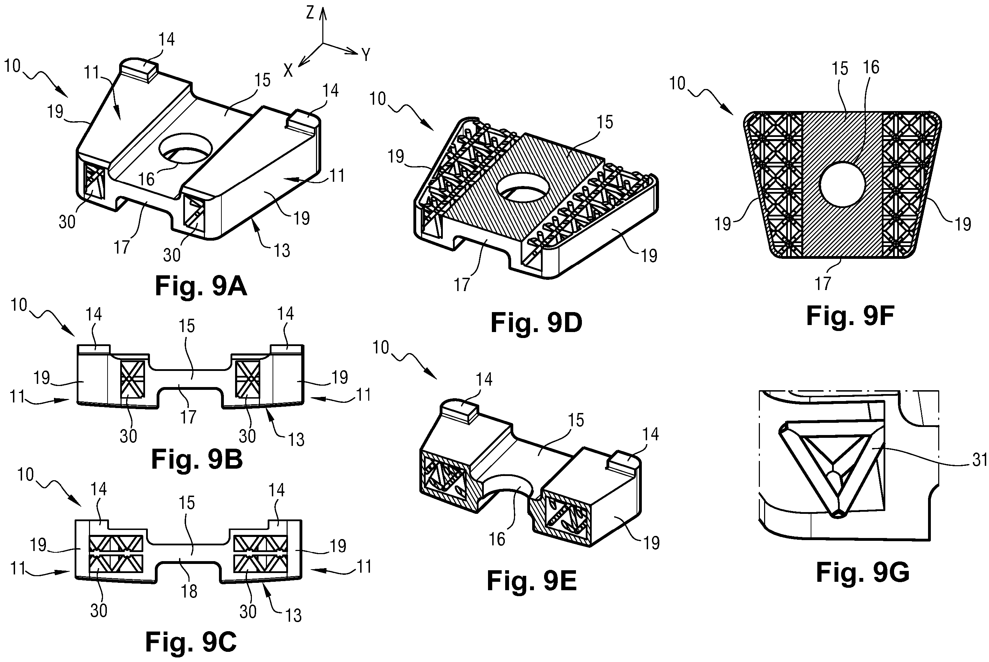

Selon un septième mode particulier de réalisation illustré aux figures 9A à 9G, la cale 10 est obtenue par fabrication additive de façon à ménager à l'intérieur de massifs 11 une structure évidée en treillis 30 dont le motif élémentaire en tétraèdre 31 est visible à la figure 9G et comprend des branches à section constante dont une branche s'étend selon la direction (0,1,0) et une branche opposée selon la direction (1,0,0). Ce motif est dupliqué selon les directions (1,0,0), $(1, 1, \sqrt{2})$, $(1, -1, \sqrt{2})$. Cette structure évidée donne lieu à un taux d'évidement des massifs d'appui de 37%. Par rapport à une cale pleine, la diminution du flux thermique transmis par conduction par la cale est estimée à 46%.

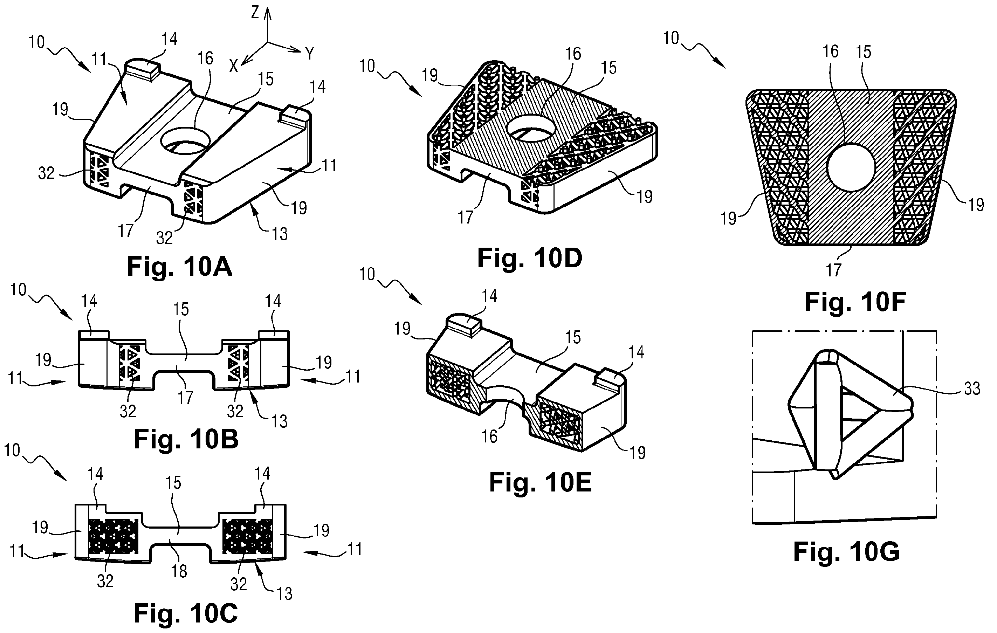

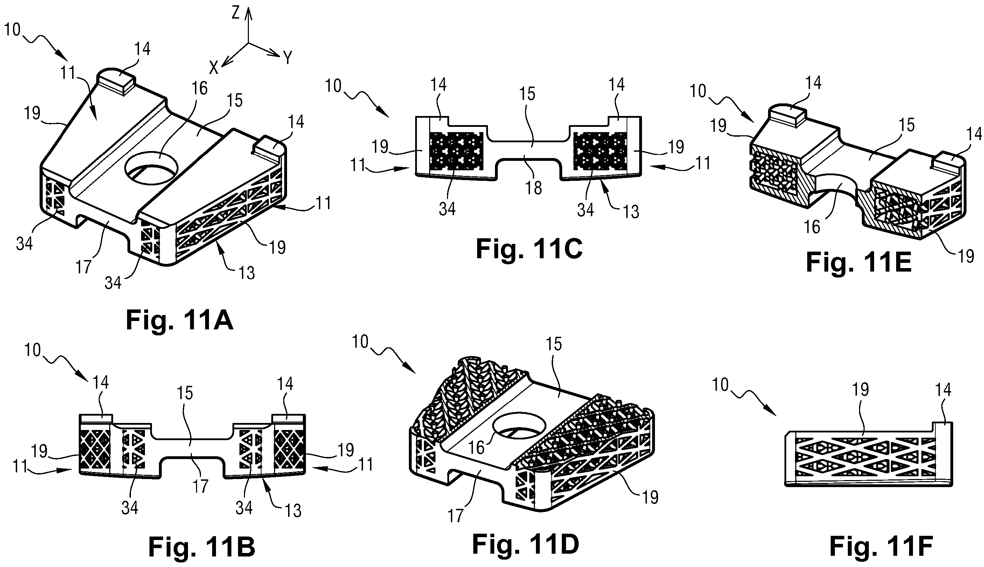

Selon un huitième mode particulier de réalisation illustré aux figures 10A à 10G, la cale 10 est obtenue par fabrication additive de façon à ménager à l'intérieur de massifs 11 une structure évidée en treillis 32 dont le motif élémentaire en tétraèdre 33 est visible à la figure 10G et comprend des branches à section constante dont une branche s'étend selon la direction (0,0,1) et une face s'étend parallèlement au plan (Y,Z). Ce motif est dupliqué selon les directions (0,0,1), $(1, \sqrt{2}, 1)$, $(-2\sqrt{2}, 1, \sqrt{3})$. Cette structure évidée donne lieu à un taux d'évidement des massifs d'appui de 44%. La diminution du flux thermique transmis par conduction par la cale est estimée à 57%. Selon un neuvième mode particulier de réalisation illustré aux figures 11A à 11F, la cale 10 est obtenue par fabrication additive de façon à ménager à l'intérieur de massifs d'appui 11 une structure évidée en treillis 34 dont le motif élémentaire en tétraèdre est similaire à celui du mode de réalisation précédent. Dans ce mode de réalisation, les évidements débouchent en outre sur les flancs 19 des massifs 11. Cette structure évidée conduit à un taux d'évidement des massifs d'appui 11 de 46%. Par rapport à une cale pleine, la diminution du flux thermique transmis par conduction par la cale est estimée à 62%.

L'évidement des massifs d'appui d'au moins 30% permet une diminution spectaculaire du flux de chaleur transmis par conduction par la cale de la barrette vers la jante, tout en préservant la capacité de la cale à transmettre le couple de freinage. On privilégiera des structures évidées réparties définissant des évidements qui débouchent sur la face avant et la face arrière de la cale et qui ménagent un chemin entre les deux faces, permettant à l'air de circuler à l'intérieur de la cale, notamment sous l'effet d'une circulation forcée d'air imposée par un ventilateur de refroidissement des freins. Les évidements peuvent également déboucher sur les flancs de la cale comme sur les figures 8A ou 11A.

L'invention n'est pas limitée à ce qui vient d'être décrit, mais englobe au contraire toute variante entrant dans le cadre défini par les revendications. En particulier,

4

bien que les évidements soient ici obtenus par des canaux tubulaires ou par répétition de motifs à branches évidés, tout autre géométrie pourra être envisagée du moment qu'elle donne lieu à un taux d'évidement des massifs d'appui au moins égal à 30%.

## Revendications

1. Cale (10) pour roue freinée d'aéronef destinée à être interposée entre une jante (1) et une barrette (3) rapportée sur la jante pour entraîner en rotation des disques rotors de frein, la cale comportant deux massifs d'appui (11) reliés par une âme (15) qui est percée pour laisser passer une vis de fixation de la barrette à la jante, la cale comportant une face avant (17) et une face arrière (18) en référence à une direction longitudinale de la barrette en appui contre la cale, **caractérisée en ce que** les massifs d'appui (11) de la cale comportent des évidements définissant un taux d'évidement d'au moins 30% d'un volume d'encombrement des massifs d'appui, **le volume d'encombrement des massifs d'appui étant identique avec et sans les évidements, et** les évidements débouchant sur la face avant et la face arrière de la cale pour ménager **dans la cale** un passage d'air entre ladite face avant et ladite face arrière.

2. Cale (10) selon la revendication 1, dans lequel les évidements débouchent sur des flancs (19) de la cale.

3. Cale (10) selon la revendication 1, dans lequel les évidements sont obtenus par réalisation de canaux tubulaires (20;21) dans les massifs d'appui s'étendant de la face avant (17) à la face arrière (18) de la cale.

4. Cale (10) selon la revendication 1, dans laquelle les évidements sont obtenus au moyen d'une structure évidée définie par répétition d'un motif à branches (23;25;27;30;31;33) et qui s'étend de la face avant (17) à la face arrière (18) de la cale.

5. Cale (10) selon la revendication 4, dans laquelle le motif est un motif en étoile (23;25) inscrit dans un cube dont les branches rayonnent du centre du cube vers les huit coins du cube.

6. Cale (10) selon la revendication 4, dans laquelle le motif élémentaire est un motif (27;30;31;33) en tétraèdre.

7. Jante (1) de roue freinée d'aéronef, la jante est équipée de barrettes (3) fixées à la jante avec interposition de cales (10) selon l'une des revendications précédentes, chaque barrette étant maintenue en appui contre l'une des cales par la vis de fixation de la barrette à la jante.

## Patentansprüche

1. Keil (10) für ein gebremstes Luftfahrzeugrad, der dafür bestimmt ist, zwischen einer Felge (1) und einer an der Felge angebrachten Leiste (3) angeordnet zu werden, um Bremsrotorscheiben in Drehung zu versetzen, wobei der Keil zwei Stützkörper (11) enthält, die durch einen durchbohrten Steg (15) miteinander verbunden sind, durch welchen eine Befestigungsschraube zur Befestigung der Leiste an der Felge hindurchgeführt werden kann, wobei der Keil in Bezug auf eine Längsrichtung der gegen den Keil abgestützten Leiste eine Vorderseite (17) und eine Rückseite (18) aufweist, **dadurch gekennzeichnet, dass** die Stützkörper (11) des Keils Höhlungen enthalten, die einen Höhlungsgrad von zumindest 30% eines Raumvolumens der Stützkörper definieren, wobei das Raumvolumen der Stützkörper, ob mit oder ohne Höhlungen, identisch ist, und wobei die Höhlungen in die Vorderseite und in die Rückseite des Keils münden, um in dem Keil einen Luftdurchtritt zwischen der Vorderseite und der Rückseite zu ermöglichen.

2. Keil (10) nach Anspruch 1, wobei die Höhlungen in die Flanken (19) des Keils münden.

3. Keil (10) nach Anspruch 1, wobei die Höhlungen durch Ausbildung von rohrförmigen Kanälen (20;21) in den sich von der Vorderseite (17) bis hin zu der Rückseite (18) des Keils erstreckenden Stützkörpern erzielt werden.

4. Keil (10) nach Anspruch 1, wobei die Höhlungen mittels einer Hohlraumstruktur erzielt werden, die durch Wiederholung eines Verzweigungsmusters (23;25;27;30;31; 33) definiert ist und sich von der Vorderseite (17) bis hin zu der Rückseite (18) des Keils erstreckt.

5. Keil (10) nach Anspruch 4, wobei es sich bei dem Muster um ein Sternmuster (23;25) handelt, das in einen Würfel eingeschrieben ist, dessen Zacken vom Mittelpunkt des Würfels zu den acht Ecken des Würfels hin ausstrahlen.

6. Keil (10) nach Anspruch 4, wobei es sich bei dem Grundmuster um ein Tetraeder-Muster (27;30;31;33) handelt.

7. Felge (1) eines gebremsten Luftfahrzeugrads, wobei die Felge mit Leisten (3) ausgestattet ist, die unter Zwischenlage von Keilen (10) nach einem der vorhergehenden Ansprüche an der Felge befestigt sind, wobei jede Leiste durch die Schraube, mit welcher die Leiste an der Felge befestigt ist, gegen einen der Keile in Anlage gehalten wird.

## Claims

1. A bar spacer (10) for a braked aircraft wheel intended to be interposed between a rim(1) and a bar (3) fitted to the rim in order to drive the rotor disks of the brake in rotation, the spacer comprising two bearing blocks (11) connected together by a core (15) that is pierced to pass a screw for fastening the bar to the rim, the spacer comprising a front face (17) and a rear face (18) with reference to a longitudinal direction of the bar bearing against the bar spacer, **characterized in that** the bearing blocks (11) of the spacer include voids defining a void fraction of at least 30% of an overall volume of the bearing blocks, the overall volume of the bearing blocks being identical with and without the voids, and the voids opening out in the front face and the rear face of the spacer in order to provide an air passage in the spacer between said front face and said rear face.

2. A bar spacer according to claim 1, wherein the voids open out in flanks (19) of the spacer.

3. A bar spacer according to claim 1, wherein the voids are obtained by making tubular channels (20; 21) in the blocks, the channels extending from the front face (17) to the rear face (18) of the spacer.

4. A bar spacer according to claim 1, wherein the voids are obtained by means of a hollowed-out structure defined by repeating a branching pattern (23; 25; 27; 30; 31; 33) and that extends from the front face (17) to the rear face (18) of the spacer.

5. A bar spacer according to claim 4, wherein the pattern is a star pattern (23; 25) inscribed in a cube having branches radiating from the center of the cube towards the eight corners of the cube.

6. A bar spacer according to claim 4, wherein the elementary pattern is a tetrahedral pattern (27; 30; 31; 33).

7. An aircraft wheel rim, the rim being fitted with bars (3) fastened to the rim with interposed bar spacers according to any preceding claim, each bar being held in abutment against one of the spacers by the screw fixing the bar to the rim.

**Fig. 1A**

EP 3 473 541 B1

Fig. 1B

**Fig. 2A**

**Fig. 2B**

**Fig. 3A**

**Fig. 3B**

**Fig. 3C**

**Fig. 4A**

**Fig. 4B**

**Fig. 4C**

**Fig. 5A**

**Fig. 5B**

**Fig. 5C**

**Fig. 5D**

**Fig. 5E**

**Fig. 5F**

**Fig. 5G**

EP 3 473 541 B1

Fig. 6A

Fig. 6B

Fig. 6C

Fig. 6D

Fig. 6E

Fig. 6F

Fig. 6G

EP 3 473 541 B1

Fig. 7A

Fig. 7B

Fig. 7C

Fig. 7D

Fig. 7E

Fig. 7F

Fig. 7G

EP 3 473 541 B1

Fig. 8A

Fig. 8B

Fig. 8C

Fig. 8D

Fig. 8E

Fig. 8F

**Fig. 9A**

**Fig. 9B**

**Fig. 9C**

**Fig. 9D**

**Fig. 9E**

**Fig. 9F**

**Fig. 9G**

EP 3 473 541 B1

Fig. 10A

Fig. 10B

Fig. 10C

Fig. 10D

Fig. 10E

Fig. 10F

Fig. 10G

Fig. 11A

Fig. 11B

Fig. 11C

Fig. 11D

Fig. 11E

Fig. 11F

EP 3 473 541 B1

**EP 3 473 541 B1**

## RÉFÉRENCES CITÉES DANS LA DESCRIPTION

**Documents brevets cités dans la description**

- US 2007246995 A